(19) Europäisches Patentamt / European Patent Office / Office européen des brevets

(11) **EP 1 605 653 B1**

(12) **EUROPÄISCHE PATENTSCHRIFT**

(45) Veröffentlichungstag und Bekanntmachung des Hinweises auf die Patenterteilung:
**30.07.2008 Patentblatt 2008/31**

(51) Int Cl.:
**H04L 25/03** *(2006.01)*

(21) Anmeldenummer: **05011846.2**

(22) Anmeldetag: **01.06.2005**

(54) **Verfahren zur drahtlosen Signalübertragung mit Entzerrungsmassnahmen**

Method of wireless transmission of signals, using equalisation measures

Procédé de transmission de signaux sans fils, employant des mesures d'égalisation

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **07.06.2004 DE 102004027719**

(43) Veröffentlichungstag der Anmeldung:
**14.12.2005 Patentblatt 2005/50**

(73) Patentinhaber: **Deutsches Zentrum für Luft- und Raumfahrt e.V.**
**51147 Köln (DE)**

(72) Erfinder:
- **Cosovic, Ivan, Dipl.-Ing.**
  **80339 München (DE)**
- **Schnell, Michael, Dr.**
  **82205 Gilching (DE)**

(74) Vertreter: **von Kirschbaum, Albrecht**
**Patentanwalt**
**Postfach 1520**
**82102 Germering (DE)**

(56) Entgegenhaltungen:
- **I. COSOVIC ET AL.: "COMBINED PRE- AND POST-EQUALIZATION FOR UPLINK TIME DIVISION DUPLEX MC-CDMA IN FADING CHANNELS" PROCEEDINGS INTERNATIONAL WORKSHOP ON MULTICARRIER SPREAD-SPECTRUM (MC-SS'03), September 2003 (2003-09), Seiten 439-450, XP002422137**
- **YU X ET AL: "Performance of an MC-CDMA system based on the complex wavelet packet and pre-equalisation technique" IEE PROCEEDINGS : COMMUNICATIONS, INSTITUTION OF ELECTRICAL ENGINEERS, GB, Bd. 151, Nr. 2, 22. April 2004 (2004-04-22), Seiten 152-156, XP006021685 ISSN: 1350-2425**
- **BISAGLIA P ET AL: "Performance comparison of single-user pre-equalization techniques for uplink mc-cdma systems" GLOBECOM'03. 2003 - IEEE GLOBAL TELECOMMUNICATIONS CONFERENCE. CONFERENCE PROCEEDINGS. SAN FRANCISCO, DEC. 1 - 5, 2003, IEEE GLOBAL TELECOMMUNICATIONS CONFERENCE, NEW YORK, NY : IEEE, US, Bd. 7, 1. Dezember 2003 (2003-12-01), Seiten 3402-3406, XP010678425 ISBN: 0-7803-7974-8**
- **COSOVIC I ET AL: "Pre-, post-, and combined-equalization single-user bounds for MC-CDMA" 7TH EUROPEAN CONFERENCE ON WIRELESS TECHNOLOGY, 2004.AMSTERDAM, THE NETHERLANDS 11-12 OCT. 2004, PISCATAWAY, NJ, USA,IEEE, 11. Oktober 2004 (2004-10-11), Seiten 321-324, XP010771305 ISBN: 1-58053-991-2**

**Beschreibung**

Die Erfindung betrifft ein Verfahren zur drahtlosen Übertragung digitaler Signale in einem Mehrträger-Übertragungssystem, wie in einem als MC-CDMA-System abgekürzten "Multi-Carrier Code-Division Multiple-Access"-System, unter Anwendung von Entzerrungsmaßnahmen, welche den aktuellen Einfluss des Übertragungskanals berücksichtigen und in einer Kombination sendeseitig durchgeführter Vorverzerrungsmaßnahmen mit empfangsseitig durchgeführten Entzerrungsmaßnahmen bestehen, wobei die sendeseitige Vorverzerrung durch Aufteilung der vorhandenen Sendeenergie in geeigneter Weise auf die verschiedenen Unterträger vorgenommen wird.

Das Verfahren nach der Erfindung lässt sich in besonders vorteilhafter Weise bei Mehrträger-Übertragungssystemen einsetzen.

Wird ein Sendesignal über einen Übertragungskanal übertragen, so beeinflusst der Übertragungskanal das ausgesendete Signal und das in einem Empfänger empfangene Signal weist Störungen und Abweichungen auf.

Neben additivem, weißen Rauschen (AWGN; "Additive White Gaussian Noise") können dabei auch Amplituden- und Phasenverzerrungen auftreten, wie beispielsweise bei der Übertragung über einen Mobilfunkkanal.

Diese Verzerrungen verschlechtern die Leistungsfähigkeit des vorliegenden Übertragungssystems.

Im Falle der Mehrträgerübertragung z.B. erfährt dabei jeder Einzelträger des Mehrträgersendesignals durch den Übertragungskanal Amplituden- und Phasenverzerrungen, die sich in der Regel durch einen multiplikativen, komplexwertigen Faktor beschreiben lassen.

Es sind bereits verschiedene Verfahren bekannt, um den Einfluss der Amplituden- und Phasenverzerrungen durch den Übertragungskanal bei drahtlosen digitalen Signalübertragungssystemen auf die Leistungsfähigkeit zu verringern.

Zum einen ist die empfängerseitige Entzerrung bekannt, die in der Literatur häufig als "Post-Equalization" oder nur kurz als "Equalization" bezeichnet wird (S. Kaiser: "Multi-Carrier CDMA Mobile Radio Systems - Analysis and Optimization of Detection, Decoding and Channel Estimation", Fortschrittberichte VDI, Düsseldorf: VDI Verlag, Reihe 10, Nr.531, 1998). Bei Mehrträgerübertragungssystemen wird zur Entzerrung jeder Einzelträger im Empfänger mit einem komplexwertigen Faktor multipliziert. Die Wahl dieses Faktors hängt dabei vom jeweilig verwendeten Entzerrungsalgorithmus und dem aktuellen Einfluss des Übertragungsverhaltens ab.

Zum anderen ist die senderseitig ausgeführte Vorverzerrung bekannt (M. Schnell: "Systeminhärente Störungen bei "Spread-Spectrum" - Vielfachzugriffsverfahren für die Mobilfunkübertragung", Fortschrittberichte VDI, Düsseldorf: VDI Verlag, Reihe 10, Nr. 505, 1997), die in der Literatur oft als "Pre-Equalization" bezeichnet wird. Bei Mehrträgerübertragungssystemen wird zur Vorverzerrung jeder Einzelträger im Sender mit einem komplexwertigen Faktor multipliziert. Die Wahl dieses Faktors hängt vom jeweilig verwendeten Vorverzerrungsalgorithmus und dem aktuellen Einfluss des Übertragungskanals ab.

Vorverzerrung und Entzerrung für die Mehrträgerübertragung beruhen gewöhnlich auf den folgenden bekannten Konzepten:

- "Maximum Ratio Combining" (MRC);
- "Equal Gain Combining" (EGC);
- "Zero Forcing"(ZF)-Kriterium;
- "Minimum Mean Square Error"(MMSE)-Kriterium;
- "Maximum Likelihood"(ML)-Kriterium;
- "Interference Cancellation".

In der deutschen Patentanmeldung DE 103 43 018.0 und im Artikel von I. Cosovic, M. Schnell und A. Springer: "Combined pre- and post-equalization for uplink time division duplex MC-CDMA in fading channels" in Proceedings International Workshop on Multi-Carrier Spread-Spectrum (MC-SS'03), September 2003, Seiten 439-450 ist bereits eine kombinierte Vorverzerrung und Entzerrung ("Combined-Equalization"; CE) vorgeschlagen, durch welche bekannte Vorverzerrungs- und Entzerrungsverfahren in geeigneter Weise kombiniert werden können.

Ein wesentliches Ergebnis im vorgenannten Artikel ist, dass bei Kombination von auf dem "Maximum Ratio Combining"(MRC)-Prinzip beruhender Vorverzerrung am Sender mit auf dem MRC-Prinzip beruhender Entzerrung am Empfänger Gewinne an Leistungsfähigkeit von bis zu 3 dB gegenüber der klassischen Matched-Filter-Grenzkurve ("Matched-Filter Bound", MFB) möglich sind. Andere Kombinationsmöglichkeiten bekannter Vorverzerrungstechniken mit anderen bekannten Entzerrungstechniken für kombinierte Vorverzerrung und Entzerrung (CE) sind ebenfalls untersucht worden, jedoch sind die möglichen Gewinne an Leistungsfähigkeit für die MRC-MRC-Kombination am größten.

Bei der Kombination von Vorverzerrung am Sender mit Entzerrung am Empfänger hat man sich bisher darauf beschränkt, bekannte Vorverzerrungs- und Entzerrungstechniken zu kombinieren. Daher ist die kombinierte Vorverzerrung/Entzerrung (CE) bislang lediglich ein heuristischer Ansatz, der nicht optimiert ist und somit nicht die maximal mögliche Leistungsfähigkeit für die Signalübertragung aufweist.

Aus dem Dokument P. Bisaglia et al.: "Performance Comparison of Single-User Pre-Equalization Techniques for Uplink MC-CDMA Systems", GLOBECOM 2003-IEEE Global Telecommunications Conference (San Francisco, US), 1.-5.12.2003, Conference Proceedings (New York, US), 1.12.2003, Seiten 3402-3406 ist die Verwendung einer Vorverzerrung im Uplink eines MC-CDMA-Übertragungssystems beschrieben. Es werden hier verschiedene Einzelnutzertechniken analysiert, bei denen auch eine Begrenzung der Sendeleistung in Betracht gezogen wird. Es wird auch eine Vorverzerrungsart gemäß dem Maximum-Ratio-Combining(MRC)-Prinzip beschrieben, wonach den Unterträgern abhängig von der Sendeleistungsbegrenzung unterschiedliche Sendeleistungsanteile zugewiesen werden.

Der Erfindung liegt die Aufgabe zu Grunde, ein speziell an die Kombination von sendeseitiger Vorverzerrung und empfangsseitiger Entzerrung angepasstes, sendeseitig durchzuführendes Vorverzerrungsverfahren zu schaffen und bereitzustellen, mit dessen Hilfe eine solche Kombination für die drahtlose, digitale Nachrichtenübertragung optimiert und somit hinsichtlich ihrer Leistungsfähigkeit deutlich verbessert werden kann.

Gemäß der Erfindung, die sich auf ein Verfahren der eingangs genannten Art bezieht, wird diese Aufgabe in vorteilhafter Weise dadurch gelöst, dass basierend auf einer den Kanaleinfluss auf Betrag und Phase jedes Unterträgers beschreibenden und der Sendeseite übermittelten Kanalzustandsinformation die sendeseitig durchgeführte Vorverzerrung im Rahmen der Sendeleistungsverteilung anhand der Diagonalelemente

$$P_{l,l}^{(k)} = \left| H_{l,l}^{(k)} \right|^p \left( H_{l,l}^{(k)} \right)^{\star} \sqrt{\frac{L}{\sum\limits_{n=1}^{L} \left| H_{n,n}^{(k)} \right|^{2p+2}}} , \quad l = 1,...,L,$$ einer diagonalen $L \times L$-Vorverzerrungsmatrix $\mathbf{P}^{(k)}$

ermittelt wird, die durch Multiplikation mit einer gespreizten Sequenz $\mathbf{s}^{(k)}$, die durch Spreizung eines Datensymbols $d^{(k)}$ der Dauer $T_d = L T_c$ ($T_c$ = Dauer eines Chips; $L$ = Länge der Spreizungssequenz) mittels einer die $k$-te Spreizungssequenz aus einem Satz von $L$ orthogonalen Spreizungssequenzen darstellenden Spreizungssequenz $\mathbf{c}^{(k)}$ entsprechend der

Gleichung $\mathbf{s}^{(k)} = d^{(k)} \mathbf{c}^{(k)} = \left( \mathbf{s}_1^{(k)}, \ldots, \mathbf{s}_L^{(k)} \right)^{\mathrm{T}}$ gebildet wird, für einen Nutzer $k$, $k = 1,...,K$, eine auszusendende vorverzerrte gespreizte Sequenz $\overline{\mathbf{s}}^{(k)}$ entsprechend der Gleichung

$\overline{\mathbf{s}}^{(k)} = \mathbf{P}^{(k)} \mathbf{s}^{(k)} = \left( \overline{\mathbf{s}}_1^{(k)}, \ldots, \overline{\mathbf{s}}_L^{(k)} \right)^{\mathrm{T}}$ erzeugt, wobei die Elemente der Vorverzerrungsmatrix basierend auf der sendeseitig bekannten, in Form einer diagonalen $L \times L$-Kanalmatrix $\mathbf{H}^{(k)}$ zusammengefassten Kanalzustandsinformation berechnet werden, deren Diagonalelemente $H_{l,l}^{(k)}$ den Kanaleinfluss auf Betrag und Phase jedes Unterträgers $l$, $l=1,...,L$, des Mehrträger-CDMA-Systems beschreiben, wobei $(\cdot)^{\mathrm{T}}$ die Transponierung und $(.)^{\star}$ die komplexe Konjugation bezeichnen und der Wurzelausdruck $\sqrt{\frac{L}{\sum\limits_{n=1}^{L} \left| H_{n,n}^{(k)} \right|^{2p+2}}}$ zur Sendeleistungsnormierung benötigt wird, und dass durch die angegebene Diagonalelemente-Gleichung außer einer Korrektur des Phaseneinflusses des Übertragungskanals eine Wichtung des Sendesignals mit einem Koeffizienten durchgeführt wird, der proportional zu

$\left| H_{l,l}^{(k)} \right|^{p+1}$ ist, wobei durch die Wahl des Parameters p die Sendeleistungsverteilung auf die Unterträger kontrolliert wird, indem denjenigen

Unterträgern, die gemäß der übermittelten Kanalzustandsinformation im Vergleich zu anderen Unterträgern eine relativ geringe Dämpfung während der Übertragung erfahren haben, durch Wahl des Parameters $p > 0$ ein relativ höherer Sendeleistungsanteil als den anderen Unterträgern zugeteilt wird.

Das Verfahren nach der Erfindung erlaubt unter einer detaillierten Analyse der Übextragungsverhältnisse die Durchführung einer optimierten Kombination von sendeseitiger Vorverzerrung und empfangsseitiger Entzerrung, so dass eine maximal mögliche Leistungsfähigkeit bei der digitalen Nachrichtenübertragung erzielt wird. Dies wird durch ein neues Vorverzerrungsverfahren erreicht, das speziell für die kombinierte Vorverzerrung/Entzerrung (CE) entwickelt und ausgelegt ist. Dieses neue Verfahren wird im Folgenden als "Generalized Pre-equalization" (G-pre-eq) bezeichnet. Insbesondere bei Einsatz in einem Mehrträger-CDMA-Übertragungssystem kann ein Parameter p für das neue, verallgemeinerte Vorverzerrungsverfahren (G-pre-eq) eingeführt werden, mit Hilfe dessen sich die Leistungsfähigkeit der kombinierten Vorverzerrung/Entzerrung (CE) optimieren lässt.

Vorteilhafte Weiterbildungen und Verwendungsmöglichkeiten des Verfahrens nach der Erfindung sind in den unmittelbar oder mittelbar auf den Patentanspruch 1 rückbezogenen Unteransprüchen angegeben.

Im später noch im Einzelnen beschriebenen Ausführungsbeispiel wird die Erfindung zwar für ein "Uplink-MC-CDMA" erläutert. Die Erfindung ist jedoch nicht auf dieses Ausführungsbeispiel beschränkt, sondern lässt sich auf folgende Fälle verallgemeinern.

Die Erfindung ist nicht nur für die "Uplink"("Reverse-Link")-Übertragung zwischen mobilen, portablen oder festen Sendestationen und der Basisstation relevant, sondern auch für die "Downlink"("Forward-Link")-Übertragung zwischen der Basisstation und den mobilen, portablen oder festen Empfangsstationen.

Die Erfindung ist nicht nur für Zeitduplexverfahren ("Time Division Duplex") geeignet, sondern auch für Frequenz- und Codeduplexverfahren.

Das Verfahren nach der Erfindung ist nicht nur für MC-CDMA relevant, sondern auch für alle Mehrträgerübertragungsverfahren, bei denen eine Vorverzerrung im Sender anhand einer Manipulation der Einzelträger erfolgen kann.

Die Erfindung ist nicht nur für ein Vorverzerrungsverfahren gemäß der im Zusammenhang mit dem nachfolgenden Ausführungsbeispiel angegebenen Gleichung (3) gültig, sondern auch für alle Vorverzerrungsverfahren, die bei der Sendeleistungsverteilung den Unterträgern, die während der Übertragung nur gering gedämpft werden, mehr Leistung und den Unterträgern, die während der Übertragung stark gedämpft werden, weniger Leistung zuweisen als dies bei Anwendung einer auf dem "Maximum Ratio Combining"(MRC)-Prinzip beruhenden Vorverzerrung der Fall ist.

Die Erfindung ist nicht nur bei Mehrträgerübertragungsverfahren nutzbar, sondern auch bei Einträgerübertragungsverfahren, wenn die Vorverzerrung im Frequenzbereich durchgeführt wird.

Das Verfahren nach der Erfindung kann darüber hinaus in vorteilhafter Weise mit beliebigen Standardverfahren der Nachrichtenübertragungstechnik verknüpft werden, wie beispielsweise mit verschiedenen Modulationsverfahren, mit verschiedenen Codierungsverfahren, mit "Space-Time Coding", mit "Multiple-Input Multiple Output"(MIMO)-Konzepten, etc. Insbesondere sind durch Verknüpfung mit Codierungsverfahren weitere beachtliche Steigerungen der Leistungsfähigkeit des erfindungsgemäßen Verfahrens erreichbar.

Das Verfahren nach der Erfindung kann prinzipiell Verwendung in der Luftschnittstelle existierender drahtloser digitaler Signalübertragungsverfahren finden, um diese zu verbessern. Allerdings ist es dazu erforderlich, die Luftschnittstelle sowohl des Senders als auch des Empfängers anzupassen. Bei bereits standardisierten Übertragungsverfahren ist dazu in aller Regel der existierende Standard zu ändern.

Im Bereich "Wireless Local Area Network" (WLAN) sind die Standards zur Zeit noch sehr im Fluss. Es werden laufend neue Standards für WLAN-Systeme mit noch höherer Leistungsfähigkeit geschaffen. Das Verfahren nach der Erfindung könnte in einen der nächsten WLAN-Standards eingebracht werden.

Die Entwicklung neuer Luftschnittstellen für die nächste Mobilfunk-Generation ("Vierte Generation Mobilfunk"; 4G) hat gerade erst begonnen. Dabei spielen Mehrträgerübertragungsverfahren eine ganz entscheidende Rolle und es ist davon auszugehen, dass diese in einem zukünftigen 4G-Standard Eingang finden. Das Verfahren nach der Erfindung kann in vorteilhafter Weise in den Entwicklungs- und anschließenden Standardisierungsprozess für zukünftige Mobilfunksysteme eingebracht werden. Der Zeitrahmen für die Einführung der ersten 4G-Mobilfunksysteme wird auf etwa 10 Jahre geschätzt.

Auch in der Luftfahrtkommunikation hat die Diskussion über neue aeronautische Kommunikationsverfahren begonnen, welche die ersten digitalen Luftfahrt-Kommunikationsstandards (VDL Mode 2, 3 und 4) langfristig ablösen sollen. Mehrträgerübertragungsverfahren sind auch in der Luftfahrtkommunikation von großem Interesse, da die Ausbreitungsbedingungen in der Luftfahrtkommunikation, insbesondere im Flughafenbereich, mit den Ausbreitungsbedingungen im Mobilfunk vergleichbar sind.

Das Verfahren nach der Erfindung kann in vorteilhafter Weise in den Entwicklungs- und anschließenden Standardisierungsprozess für zukünftige aeronautische Kommunikationsverfahren eingebracht werden. Der Zeitrahmen für die Einführung neuer aeronautischer Kommunikationsverfahren wird erfahrungsgemäß länger als 10 Jahre dauern. Allerdings wird zur Zeit davon ausgegangen, dass im Zeitraum von 2015 bis 2020 die Kapazitätsgrenze der existierenden aeronautischen Kommunikationssysteme in Europa erreicht ist. Dies bedeutet, dass bis dahin neue aeronautische Kommunikationssysteme zuverlässig einsetzbar vorliegen müssen.

Zur Erläuterung des Verfahrens nach der Erfindung werden nachfolgend anhand von beigefügten Zeichnungen ein vorteilhaftes Ausführungsbeispiel für ein Uplink Multi-Carrier Code-Division Multiple-Access(MC-CDMA)-System im Mobilfunkbereich, theoretische Überlegungen dazu und Leistungsfähigkeitsergebnisse von diesbezüglichen Computersimulationen beschrieben. Es zeigen:

Fig. 1    das Blockschaltbild eines Senders eines MC-CDMA-Uplink-Übertragungssystems für einen mobilen Nutzer $k$, $k$ = 1,...,$K$, der $K$ gleichzeitig aktiven Nutzer innerhalb einer Mobilfunkzelle,

Fig.2    in einem Funktionsdiagramm die Bitfehlerrate (BER) in Abhängigkeit des Parameters p für ein festes Signal/Rausch-Verhältnis (SNR) von $E_b/N_0$ = 0 dB ($P_b \approx 10^{-4}$) , und

Fig.3 in einem weiteren Funktionsdiagramm die Bitfehlerrate (BER) in Abhängigkeit des Signal/Rausch-Verhältnisses (SNR) von $E_b/N_0$ in dB für das betrachtete, codierte Uplink-MC-CDMA-Übertragungssystem mit kombinierter Vorverzerrung/Entzerrung (CE), basierend auf MRC- bzw. G-pre-eq-Vorverzerrung und soft PIC-Empfängertechnik mit anschließender post-eq-MRC - SUBs und die Simulationsergebnisse.

Das Verfahren nach der Erfindung wird nachfolgend anhand eines codierten Uplink-MC-CDMA-Übertragungssystems für die Mobilfunkübertragung erläutert, das eine kombinierte Vorverzerrung/Entzerrung (CE) zur Vorverzerrung im Sender und Entzerrung im Empfänger verwendet. In der nachfolgenden Beschreibung werden Sequenzen endlicher Länge zu Vektoren zusammengefasst und durch fettgedruckte Kleinbuchstaben repräsentiert. Großbuchstaben in Fettdruck stellen Matrizen dar.

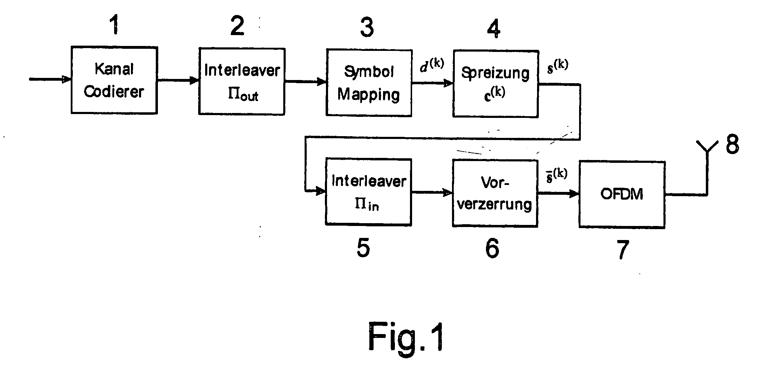

In Fig. 1 ist in einem Blockschaltbild ein Sender des betrachteten Uplink-MC-CDMA-Übertragungssystems für einen Nutzer $k$, $k = 1,...,K$, dargestellt. Die Größe $K$ bezeichnet die Anzahl der gleichzeitig aktiven Nutzer innerhalb einer Mobilfunkzelle. Nach Kanalcodierung des Signals in einem Kanalcodierer 1, äußerem Interleaving $\Pi_{out}$ in einem Interleaver 2 und Symbolmapping in einem Symbolmapper 3 wird das resultierende Datensymbol $d^{(k)}$ in einem Spreizmodulator 4 mittels einer Spreizungssequenz $\mathbf{c}^{(k)}$ gespreizt.

Zur Kanalcodierung wird ein Standardfaltungscode verwendet. Die Dauer eines codierten Datensymbols $d^{(k)}$ beträgt $T_d = LT_c$, wobei $T_c$ die Dauer eines Chips und $L$ die Länge der Spreizungssequenz darstellen. Nach der Spreizung liegt die Sequenz $\mathbf{s}^{(k)}$ vor:

$$\mathbf{s}^{(k)} = d^{(k)} \mathbf{c}^{(k)} = \left( s_1^{(k)}, \ldots, s_L^{(k)} \right)^{\mathbf{T}}, \qquad (1)$$

wobei $\mathbf{c}^{(k)}$ die $k$-te Spreizungssequenz aus einem Satz von $L$ orthogonalen Spreizungssequenzen darstellt und $(.)^{\mathbf{T}}$ die Transponierung bezeichnet. Ein nachfolgender Interleaver 5 zur Durchführung eines inneren Interleaving $\Pi_{in}$ dient der Verteilung der $L$ Chips $s_l^{(k)}$, $l = 1, \ldots , L$, eines Datensymbols auf die $N_c \geq L$ Unterträger des MC-CDMA-Übertragungssystems. In der Regel ist $N_c$ ein Vielfaches von $L$ und der Interleaver 5 verteilt die Chips $s_l^{(k)}$ eines Datensymbols auf möglichst entfernte Unterträger.

Auf diese Weise wird die Frequenzdiversität maximiert und für die $L$ Chips eines Datensymbols kann unabhängiges Rayleigh-Fading angenommen werden. Zur Vereinfachung der Schreibweise bleibt in der nachfolgenden Darstellung der Interleaver 5 zunächst unberücksichtigt. Sowohl bei den später noch vorgenommenen theoretischen Überlegungen als auch bei den danach noch abgehandelten Computersimulationen wird der Einfluss des Interleavers 5 jedoch betrachtet.

Nach dem Interleaver 5 wird die Sequenz $\mathbf{s}^{(k)}$ gemäß

$$\overline{\mathbf{s}}^{(k)} = \mathbf{P}^{(k)} \mathbf{s}^{(k)} = \left( \overline{s}_1^{(k)}, \ldots, \overline{s}_L^{(k)} \right)^{\mathbf{T}} \qquad (2)$$

mit Hilfe eines Vorverzerrers 6 vorverzerrt, wobei $\mathbf{P}^{(k)}$ die diagonale $L \times L$-Vorverzerrungsmatrix ist, die die Diagonalelemente $P_{l,l}^{(k)}$, $l = 1, \ldots , L$, besitzt. Die Elemente der Vorverzerrungsmatrix $\mathbf{P}^{(k)}$ werden basierend auf der Kanalzustandsinformation berechnet, die am Sender bekannt sein muss. Die Kanalzustandsinformation wird in der diagonalen $L \times L$-Kanalmatrix $\mathbf{H}^{(k)}$ zusammengefasst. Die Diagonalelemente $H_{l,l}^{(k)}$ der Kanalmatrix beschreiben den Kanaleinfluss auf Betrag und Phase jedes Unterträgers $l$, $l = 1,...,L$, des MC-CDMA-Systems.

Es sind, wie bereits erwähnt worden ist, verschiedene Vorverzerrungsmaßnahmen bekannt, beispielsweise "Zero-Forcing Pre-equalization" (pre-eq ZF), "Equal gain Combining Pre-equalization" (pre-eq EGC) oder "Maximum Ratio Combining Pre-equalization" (pre-eq MRC), die durch unterschiedliche Diagonalelemente $P_{l,l}^{(k)}$, $l = 1, \ldots , L$, für die Vorverzerrungsmatrix charakterisiert werden.

Eine Übersicht über den Stand der Technik von Vorverzerrungsverfahren ist in dem Artikel von I. Cosovic, M.

Schnell und A. Springer: "On the performance of different channel pre-equalization techniques for uplink time division duplex MC-CDMA" in Proceedings IEEE Vehicular Technology Conference (VTC'03, Fall), Oktober 2003 zu finden.

Abschließend wird das vorverzerrte Sendesignal mittels "Orthogonal Frequency-Division Multiplexing" (OFDM) mit Hilfe eines OFDM-Multiplexers 7 in den Zeitbereich transformiert und unter Ausstrahlung über eine Funkantenne 8 übertragen.

Das gemäß der vorliegenden Erfindung arbeitende und abgekürzt mit G-pre-eq bezeichnete Vorverzerrungsverfahren ist ein neues Vorverzerrungsverfahren, das sich mittels der Diagonalelemente $P_{1,1}^{(k)}$ der Vorverzerrungs-matrix gemäß

$$P_{1,1}^{(k)} = \left| H_{1,1}^{(k)} \right|^P \left( H_{1,1}^{(k)} \right)^* \sqrt{\frac{L}{\sum\limits_{n=1}^{L} \left| H_{n,n}^{(k)} \right|^{2p+2}}} \tag{3}$$

beschreiben lässt, wobei (.) * die komplexe Konjugation bezeichnet und der Wurzelausdruck zur Sendeleistungsnormierung benötigt wird. Betrachtet man die Gleichung (3) genauer, so erkennt man, dass G-pre-eq den Phaseneinfluss des Übertragungskanals korrigiert und das Sendesignal mit einem Koeffizienten gewichtet, der proportional zu $\left| H_{1,1}^{(k)} \right|^{p+1}$ ist.

Wählt man für den Parameter $p$ die Werte $p = -2$, $p = -1$ oder $p = 0$, so erhält man die bekannten Vorverzerrungsverfahren pre-eq ZF, pre-eq EGC bzw. pre-eq MRC. Für andere Werte von $p$ werden dagegen neue Vorverzerrungsverfahren realisiert. Somit umfasst G-pre-eq nicht nur bekannte Vorverzerrungsverfahren, sondern erlaubt auch eine Verallgemeinerung auf neue Vorverzerrungsverfahren, woraus sich auch die gewählte Bezeichnung "Verallgemeinerte Vorverzerrung" bzw. "Generalized Pre-equalization" (G-pre-eq) ableitet.

Von besonderem Interesse ist G-pre-eq bei einer Parameterwahl $p > 0$. In diesem Fall wird nämlich den Unterträgern, die eine geringere Dämpfung während der Übertragung erfahren, mehr Sendeleistung zugeteilt als bei den bekannten Vorverzerrungsverfahren. Die optimale Verteilung der Sendeleistung auf die zur Verfügung stehenden Unterträger in Bezug auf eine Maximierung des Signal/Rausch-Verhältnisses ("Signal-to-Noise-Ratio"; SNR) und damit in Bezug auf eine Minimierung der Bitfehlerrate ("Bit Error Rate"; BER) besteht darin, die gesamte Sendeleistung auf den Unterträger mit der geringsten Dämpfung zu geben. Diesem Optimum nähert man sich um so mehr, je größer man $p$ wählt.

Die optimale Sendeleistungsverteilung, d.h. die Zuweisung der gesamten Sendeleistung auf den Unterträger mit der geringsten Dämpfung, ist allerdings nur von theoretischer Bedeutung. In der Praxis würde die optimale Sendeleistungsverteilung dazu führen, dass in dem betrachteten Uplink-MC-CDMA-Übertragungssystem die Störungen der $K$ gleichzeitig aktiven Teilnehmer untereinander viel zu stark werden, d.h. es treten sogenannte "Multiple-Access Interference"(MAI)-Störungen auf. Auf Grund der starken MAI würde in diesem Fall die Übertragung vollständig zusammenbrechen.

Das neue Vorverzerrungsverfahren G-pre-eq gemäß der vorliegenden Erfindung erlaubt es dagegen, mittels dem Parameter $p$ die Sendesignalleistungsverteilung zu kontrollieren. Je größer der Parameter $p$ gewählt wird, desto mehr werden "gute" Unterträger bevorzugt, und man nähert sich dem theoretisch optimalen Fall der Sendeleistungszuteilung allein auf den besten Unterträger. Allerdings steigt auch die MAI mit Vergrößerung des Parameters $p$ an. Der Parameter $p$ ist also möglichst groß zu wählen, darf aber nicht so groß gewählt werden, dass der Empfänger die resultierende MAI nicht mehr genügend abschwächen kann.

Offensichtlich gibt es einen optimalen Wert für den Parameter $p$, bei dem das betrachtete digitale Nachrichtenübertragungssystem die beste Leistungsfähigkeit hat. Dieser optimale Wert des Parameters $p$ kann beispielsweise durch Simulation ermittelt werden. Eine analytische Bestimmung des optimalen Parameters $p$ ist sehr schwierig durchführbar, da in die Optimierung die MAI-Unterdrückungsfähigkeit des Empfängers eingeht.

Im Folgenden wird die Leistungsfähigkeit ermittelt, die durch Verwendung von G-pre-eq bei der Kombination von Vorverzerrung/Entzerrung (CE) erzielt werden kann, und mit den Leistungsfähigkeitsergebnissen verglichen, die mit dem besten bisher bekannten Vorverzerrungsverfahren, nämlich mit pre-eq MRC, für die Kombination von Vorverzerrung/Entzerrung (CE) erreicht werden können. Dazu werden zunächst theoretische Überlegungen angestellt und anschließend Ergebnisse von Computersimulationen präsentiert.

Die theoretischen Überlegungen basieren auf der Untersuchung der sogenannten Einnutzergrenzkurve ("Single-User Bound"; SUB). Die SUB stellt die bestmögliche Leistungsfähigkeit in Bezug auf die Bitfehlerrate BER dar, da die alleinige Übertragung von einem Nutzer betrachtet wird und somit die MAI komplett entfällt. Zur Vereinfachung der Darstellung wird der Nutzerindex $k$ für die nachfolgenden Betrachtungen weggelassen.

Im Folgenden wird gezeigt, dass sich bei Verwendung von kombinierter Vorverzerrung/Entzerrung CE das Signal/Rausch-Verhältnis SNR, gegeben in $E_b/N_0$, wobei $E_b$ die Energie eines Sendebits und $N_0$ die Rauschleistungs-dichte bedeutet, vom Signal/Rausch-Verhältnis SNR $\gamma_b$ am Empfänger unterscheidet. Das Signal/Rausch-Verhältnis SNR $\gamma_b$ ist deutlich größer als das Signal/Rausch-Verhältnis $E_b/N_0$, wodurch neue, verbesserte SUBs durch die Anwendung der kombinierten Vorverzerrung/Entzerrung CE resultieren. Der größtmögliche Gewinn an Leistungsfähigkeit (Performance) für ein realistisches Uplink-MC-CDMA-Übertragungssystem lässt sich mit G-pre-eq und optimalem Parameter $p$ erzielen.

Die beste Leistungsfähigkeit im Einnutzerfall bei Verwendung der kombinierten Vorverzerrung/Entzerrung CE gemäß dem Stand der Technik lässt sich durch Kombination von pre-eq MRC am Sender mit auf dem MRC-Prinzip beruhender Entzerrung ("MRC Post-equalization"; post-eq MRC) am Empfänger erzielen. Das resultierende Entzerrungsverfahren wird als MRC-MRC CE bezeichnet, da sowohl im Sender als auch im Empfänger MRC als Grundlage für die Vorverzerrung bzw. Entzerrung verwendet wird. Es lässt sich zeigen, dass sich in diesem Fall das Signal/Rausch-Verhältnis SNR $\gamma_b$ zu

$$\gamma_b = \frac{\sum\limits_{l=1}^{L} |H_{1,1}|^4}{\sum\limits_{l=1}^{L} |H_{1,1}|^2} \cdot \frac{E_b}{N_0} \qquad (4)$$

ergibt.

Unter der sinnvollen und üblichen Annahme von unabhängigem Rayleigh-Fading für alle Unterträger, welche die Chips eines Sendesymbols tragen, vereinfacht sich Gleichung (4) im Grenzfall $L \rightarrow \infty$ ("unendliche Diversität") zu

$$\lim_{L \rightarrow \infty} \{\gamma_b\} = 2 \cdot \frac{E_b}{N_0} \quad . \qquad (5)$$

Das in Gleichung (5) dargestellte Ergebnis bedeutet, dass unter der Annahme von unabhängigem Rayleigh-Fading die SUB für MRC-MRC CE (kurz: MRC-MRC SUB) im Grenzfall $L \rightarrow \infty$ eine um 3 dB bessere Leistungsfähigkeit als die AWGN-Kurve zeigt, die bekanntlich die klassische MFB ("Matched Filter Bound") für den Grenzfall $L \rightarrow \infty$ darstellt. Für endliches $L$ sind entsprechende, etwas niedrigere Gewinne an Leistungsfähigkeit zwischen MRC-MRC SUB und klassischer MFB erzielbar.

Im Folgenden wird die SUB für den hypothetischen Fall bestimmt, dass die gesamte Sendeleistung auf nur einen Unterträger gegeben und auch im Empfänger nur dieser Unterträger ausgewertet wird. Ausgewählt wird dabei der Unterträger, der bei der Übertragung die geringste Dämpfung erfährt. Das resultierende Entzerrungsverfahren wird als "Selection Diversity" (SD) CE und die korrespondierende Einnutzergrenzkurve als SD SUB bezeichnet.

Es ist zu beachten, dass dieser Fall nur von theoretischem Interesse ist und nicht auf realistische Übertragungsverfahren angewendet wird, da entsprechend den obigen Ausführungen im Mehrnutzerfall die MAI viel zu stark werden würde. Für SD CE lässt sich zeigen, dass das Signal/Rausch-Verhältnis SNR $\gamma_b$ entsprechend

$$\gamma_b = \max_{l=1,\ldots,L} \left\{ |H_{1,1}|^2 \right\} \cdot \frac{E_b}{N_0} \qquad (6)$$

dargestellt werden kann. Betrachtet man hier den Grenzfall $L \rightarrow \infty$ für unabhängiges Rayleigh-Fading, so erhält man

$$\lim_{L \to \infty} \{\gamma_b\} \to \infty . \qquad\qquad (7)$$

Gleichung (7) sagt aus, dass sich das Signal/Rausch-Verhältnis SNR $\gamma_b$ für Uplink-MC-CDMA im Falle unendlicher Diversität mit SD CE beliebig verbessern lässt. Dieses Ergebnis ist der Ausgangspunkt gewesen, nach einem optimierten Vorverzerrungsverfahren für kombinierte Vorverzerrung/Entzerrung CE zu suchen.

Das gesuchte Verfahren muss zum einem bei der Sendesignalleistungsverteilung die besseren Unterträger stärker gewichten als MRC, um eine bessere SUB zu realisieren. Zum anderen darf das gesuchte Verfahren die MAI nicht zu stark erhöhen, so dass der Empfänger die MAI noch geeignet unterdrücken kann. Das Vorverzerrungsverfahren G-pre-eq gemäß der Erfindung erfüllt diese beiden Forderungen und erlaubt zudem über den Parameter $p$ eine optimale Anpassung von Sendesignalleistungsverteilung im Sender an die MAI-Unterdrückungsfähigkeit des zugrunde liegenden Empfängers.

Im Folgenden wird die SUB für kombinierte Vorverzerrung/Entzerrung CE betrachtet, bei der das Vorverzerrungsverfahren G-pre-eq gemäß der Erfindung in Verbindung mit post-eq MRC am Empfänger kombiniert wird. Für diesen Fall lässt sich das Signal/Rausch-Verhältnis SNR $\gamma_b$ am Empfänger entsprechend

$$\gamma_b = \frac{\sum_{l=1}^{L} |H_{l,l}|^{2p+4}}{\sum_{l=1}^{L} |H_{l,l}|^{2p+2}} \cdot \frac{E_b}{N_0} \qquad\qquad (8)$$

darstellen. In Gleichung (8) sind folgende bekannte Spezialfälle enthalten. Für $p = -1$ reduziert sich die kombinierte Vorverzerrung/Entzerrung CE mit G-pre-eq auf eine kombinierte Vorverzerrung/Entzerrung CE mit dem Vorverzerrungsverfahren pre-eq EGC. Die SUB für diesen Fall ist die klassische MFB.

Betrachtet man den Fall $p = 0$ wird MRC-MRC CE realisiert und die Gleichungen (4) und (5) sind gültig. Dabei ist zu beachten, dass die SUB von MRC-MRC CE bereits um bis zu 3 dB besser als die klassische MFB ist. Wählt man $p > 0$ wird das Signal/Rausch-Verhältnis SNR $\gamma_b$ gegenüber Gleichung (4) weiter verbessert. Verwendet man also für die kombinierte Vorverzerrung/Entzerrung CE das Vorverzerrungsverfahren G-pre-eq gemäß der Erfindung zusammen mit einem Parameter $p > 0$, so wird eine SUB realisiert, die gegenüber dem Stand der Technik (MRC-MRC SUB) verbessert ist.

Für den Grenzfall $L \to \infty$ und unabhängiges Rayleigh-Fading vereinfacht sich die Gleichung (8) zu

$$\lim_{L \to \infty} \{\gamma_b\} = 2 \cdot \frac{\Gamma(p + 3)}{\Gamma(p + 2)} \cdot \frac{E_b}{N_0} = (p + 2) \cdot \frac{E_b}{N_0} , \qquad\qquad (9)$$

wobei $\Gamma(.)$ die Gamma-Funktion bedeutet. An diesem Grenzfall erkennt man die Abhängigkeit des Signal/Rausch-Verhältnisses SNR $\gamma_b$ vom Parameter $p$ deutlich. Je größer der Parameter $p$ gewählt wird, desto größer ist die Verbesserung des Signal/Rausch-Verhältnisses SNR $\gamma_b$. Zu beachten ist, dass die Gleichung (9) für die Spezialfälle $p = 0$ und $p \to \infty$ in Gleichung (5) bzw. Gleichung (7) übergeht.

Die vorstehenden theoretischen Überlegungen zeigen, dass mit dem Vorverzerrungsverfahren G-pre-eq gemäß der Erfindung bei kombinierter Vorverzerrung/Entzerrung CE eine Verbesserung des Signal/Rausch-Verhältnisses SNR und damit der entsprechenden SUB erzielt werden kann. Die Größe der Verbesserung ist abhängig vom gewählten Parameter $p$.

Im Folgenden wird anhand von Performanceergebnissen, die mit Hilfe von Computersimulationen gewonnen wurden, gezeigt, dass die verbesserten SUBs in realistischen Uplink-MC-CDMA- Übertragungsverfahren annähernd erreicht werden, und es werden die resultierenden Gewinne an Leistungsfähigkeit gegenüber dem Stand der Technik angegeben.

Für die Computersimulationen wird ein Uplink-MC-CDMA- Übertragungsverfahren mit den folgenden Parametern betrachtet:

- Bandbreite: 40 MHz;
- Trägerfrequenz: 5 GHz;
- Anzahl der Unterträger: 1024;
- Länge der Spreizungsfolge: $L$ = 16;
- MC-CDMA-Symboldauer: 25,6 μs;
- Codierung: Standardfaltungscode mit Gedächtnislänge 6 und Coderate ½;
- Modulation: QPSK;
- Anzahl der gleichzeitig aktiven Nutzer: $K = L = 16$ (Volllast, "fully loaded system").

Entsprechend dem Stand der Technik für kombinierte Vorverzerrung/Entzerrung CE wird im Empfänger ein leistungsfähiges Verfahren zur MAI-Unterdrückung eingesetzt, nämlich "Minimum Mean Square Error Multi-User Detection" (MMSE-MUD) zusammen mit soft "Parallel Interference Cancellation" (PIC). Nach der MAI-Unterdrückung wird noch post-eq MRC verwendet, um die Chips eines Sendesymbols wieder zusammenzufassen.

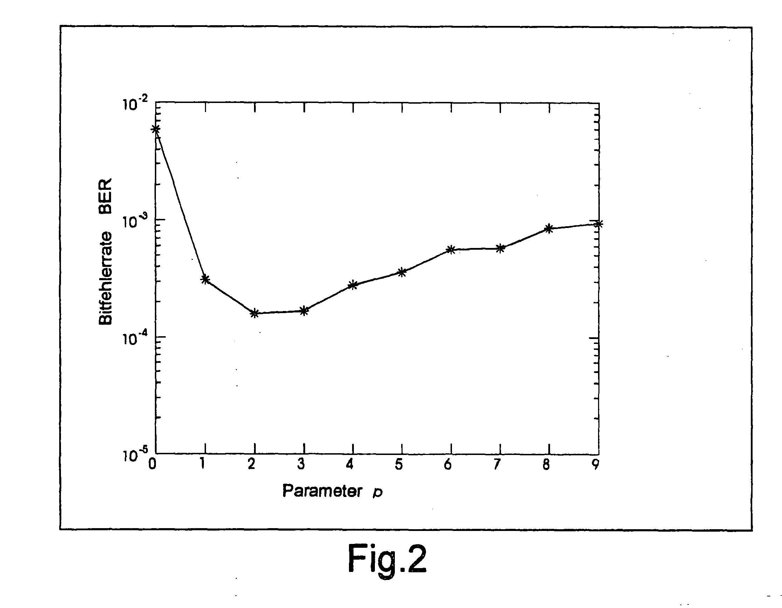

Zunächst wird der Parameter $p$ des Vorverzerrungsverfahrens G-pre-eq optimiert und damit bestmöglich an die zu Grunde liegende Empfängerstruktur angepasst. In Fig.2 ist die erzielte Bitfehlerrate BER in Abhängigkeit des Parameters $p$ dargestellt. Das Signal/Rausch-Verhältnis SNR $E_b/N_0$ ist dabei so gewählt, dass ein BER-Arbeitspunkt von etwa $P_b \approx 10^{-4}$ eingestellt wird. Man erkennt, dass die Bitfehlerrate BER für das betrachtete codierte Uplink-MC-CDMA-Übertragungssystem bei einer Wahl des Parameters $p$ von $p$ = 2...3 minimiert wird.

Das Wesentliche an diesem Ergebnis ist, dass mit dieser Parameterwahl für $p$ die SUB gegenüber dem Stand der Technik deutlich verbessert werden kann. Zur Erinnerung sei hier erwähnt, dass der Stand der Technik mit einem Parameter $p$ = 0 arbeitet. Aus Gleichung (9) folgt, dass bei G-Pre-eq mit einem optimal gewählten Parameter $p$ = 3 im Grenzfall $L \rightarrow \infty$ das Signal/Rausch-Verhältnis SNR $\gamma_b$ am Empfänger um den Faktor 2,5, also um etwa 4 dB, gegenüber dem Stand der Technik verbessert wird. Für endliche Werte von $L$ werden entsprechende, etwas kleinere Gewinne an Leistungsfähigkeit erzielt.

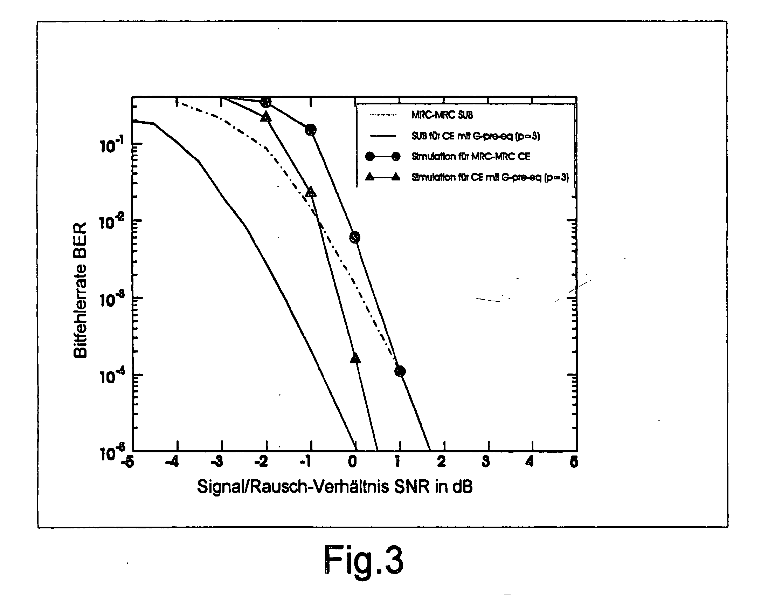

Welche Gewinne an Leistungsfähigkeit gegenüber dem Stand der Technik in einem realistischen Uplink-MC-CDMA-Übertragungsverfahren tatsächlich erzielt werden, ist in Fig.3 dargestellt. Das MC-CDMA-System besitzt für diese Simulationen die vorher angegebenen Parameter. Insbesondere ist die Spreizungslänge auf $L$ = 16 gesetzt. In Fig.3 ist die Bitfehlerrate BER in Abhängigkeit des Signal/Rausch-Verhältnisses SNR $E_b/N_0$ angegeben. Als Referenz sind die MRC-MRC SUB entsprechend dem Stand der Technik und die SUB angegeben, die bei Verwendung von G-pre-eq mit $p$ = 3 als Vorverzerrungsverfahren innerhalb einer kombinierten Vorverzerrung/Entzerrung CE gültig ist.

Vergleicht man die beiden SUBs, so erkennt man, dass unter Verwendung von G-pre-eq eine Verbesserung an Leistungsfähigkeit von etwa 1,6 dB erzielt werden kann. Die Simulationsergebnisse zeigen, dass die beiden SUBs in realistischen Übertragungssystemen auch nahezu erreicht werden. Die Verbesserung an Leistungsfähigkeit beträgt hier etwa 1,0 dB, wenn man eine Bitfehlerrate BER von $P_b = 10^{-4}$ betrachtet, und etwa 1,2 dB, wenn man eine Bitfehlerrate BER von $P_b = 10^{-5}$ betrachtet.

Der Gewinn an Leistungsfähigkeit durch Verwendung des Vorverzerrungsverfahrens G-pre-eq gemäß der Erfindung beträgt somit bei Verwendung von Spreizungsfolgen der Länge $L$ = 16 theoretisch 1,6 dB. In der Praxis wird ein Gewinn von etwa 1,2 dB realisiert. Zu beachten ist, dass bei Spreizungslängen $L$ > 16 sogar noch höhere Gewinne erzielt werden können, denn es wurde vorstehend theoretisch nachgewiesen, dass für $L \rightarrow \infty$ und bei $p$ = 3 Gewinne an Leistungsfähigkeit von bis zu 4 dB möglich sind. Darüber hinaus ist zu erwarten, dass für $L$ > 16 der optimale Parameter $p$ einen Wert $p$ > 3 besitzt, wodurch sich die Gewinne an Leistungsfähigkeit sogar noch weiter erhöhen.

Bezugszeichenliste

| | |
|---|---|
| 1 | Kanalcodierer |
| 2 | Interleaver $\Pi_{out}$ |
| 3 | Symbolmapper |
| 4 | Spreizmodulator |
| 5 | Interleaver $\Pi_{in}$ |
| 6 | Vorverzerrer |
| 7 | OFDM-Multiplexer |
| 8 | Funkantenne |

**Patentansprüche**

1. Verfahren zur drahtlosen Übertragung digitaler Signale in einem Mehrträger-Übertragungssystem, wie in einem als MC-CDMA-System abgekürzten "Multi-Carrier Code-Division Multiple-Access"-System, unter Anwendung von Entzerrungsmaßnahmen, welche den aktuellen Einfluss des Übertragungskanals berücksichtigen und in einer Kombination sendeseitig durchgeführter Vorverzerrungsmaßnahmen mit empfangsseitig durchgeführten Entzerrungsmaßnahmen bestehen, wobei die sendeseitige Vorverzerrung durch Aufteilung der vorhandenen Sendeenergie in geeigneter Weise auf die verschiedenen Unterträger vorgenommen wird, **dadurch gekennzeichnet, dass** basierend auf einer den Kanaleinfluss auf Betrag und Phase jedes Unterträgers beschreibenden und der Sendeseite übermittelten Kanalzustandsinformation die sendeseitig durchgeführte Vorverzerrung im Rahmen der Sendeleistungsverteilung anhand der Diagonalelemente

$$P_{l,l}^{(k)} = \left|H_{l,l}^{(k)}\right|^{p}\left(H_{l,l}^{(k)}\right)^{\star}\sqrt{\frac{L}{\sum\limits_{n=1}^{L}\left|H_{n,n}^{(k)}\right|^{2p+2}}}\ , \quad l=1,\dots,$$

$L,$ einer diagonalen $L \times L$-Vorverzerrungsmatrix $\mathbf{P}^{(k)}$ ermittelt wird, die durch Multiplikation mit einer gespreizten Sequenz $\mathbf{s}^{(k)}$, die durch Spreizung eines Datensymbols $d^{(k)}$ der Dauer $T_d = LT_c$, wobei $T_c =$ Dauer eines Chips und $V L =$ Länge der Spreizungssequenz, mittels einer die $k$-te Spreizungssequenz aus einem Satz von $L$ orthogonalen Spreizungssequenzen darstellenden Spreizungssequenz $\mathbf{c}^{(k)}$ entsprechend der Gleichung

$$\mathbf{s}^{(k)} = d^{(k)}\mathbf{c}^{(k)} = \left(s_1^{(k)}, \dots, s_L^{(k)}\right)^{\mathrm{T}}$$ gebildet wird, für einen Nutzer $k, k = 1,\dots, K$, eine auszusendende vorverzerrte gespreizte Sequenz $\overline{\mathbf{s}}^{(k)}$ entsprechend der Gleichung

$$\overline{\mathbf{s}}^{(k)} = \mathbf{P}^{(k)}\mathbf{s}^{(k)} = \left(\overline{s}_1^{(k)}, \dots, \overline{s}_L^{(k)}\right)^{\mathrm{T}}$$ erzeugt, wobei die Elemente der Vorverzerrungsmatrix basierend auf der sendeseitig bekannten, in Form einer diagonalen $L \times L$-Kanalmatrix $\mathbf{H}^{(k)}$ zusammengefassten Kanalzustandsinformation berechnet werden, deren Diagonalelemente $H_{l,l}^{(k)}$ den Kanaleinfluss auf Betrag und Phase jedes Unterträgers I, $l=1,\dots,L$, des Mehrträger-CDMA-Systems beschreiben, wobei $(.)^{\mathrm{T}}$ die Transponierung und $(.)^{\star}$ die komplexe Konjugation bezeichnen und der Wurzelausdruck $\sqrt{\dfrac{L}{\sum\limits_{n=1}^{L}\left|H_{n,n}^{(k)}\right|^{2p+2}}}$ zur Sendeleistungsnormierung benötigt wird, und dass durch die angegebene Diagonalelemente-Gleichung außer einer Korrektur des Phaseneinflusses des Übertragungskanals eine Wichtung des Sendesignals mit einem Koeffizienten durchgeführt wird, der proportional zu $\left|H_{l,l}^{(k)}\right|^{p+1}$ ist, wobei durch die Wahl des Parameters p die Sendeleistungsverteilung auf die Unterträger kontrolliert wird, indem denjenigen Unterträgern, die gemäß der übermittelten Kanalzustandsinformation im Vergleich zu anderen Unterträgern eine relativ geringe Dämpfung während der Übertragung erfahren haben, durch Wahl des Parameters $p > 0$ ein relativ höherer Sendeleistungsanteil als den anderen Unterträgern zugeteilt wird.

2. Verfahren nach Anspruch 1, **dadurch gekennzeichnet, dass** der Parameter p möglichst groß gewählt, aber nicht so groß gewählt wird, dass empfangsseitig die resultierende Multiple-Access Interference, abgekürzt MAI, nicht mehr genügend abgeschwächt werden kann.

3. Verfahren nach Anspruch 1 oder 2, **dadurch gekennzeichnet, dass** ein optimaler Wert für den Parameter p durch Simulation unter Berücksichtigung der auftretenden empfangsseitigen MAI-Unterdrückungsfähigkeit ermittelt wird.

4. Verfahren nach Anspruch 1, **gekennzeichnet durch** eine Kombination mit beliebigen Standardverfahren der Nachrichtenübertragung, wie unterschiedlichen Modulationsverfahren, verschiedenen Codierungsverfahren, "Space-Time Coding" und "Multiple-Input Multiple-Output"-Verfahren, abgekürzt MIMO-Verfahren.

**5.** Verfahren nach einem der vorhergehenden Ansprüche, **dadurch gekennzeichnet, dass** die Signalübertragung in einem Zeitduplex-System betrieben wird.

**6.** Verfahren nach einem der Ansprüche 1 bis 4, **dadurch gekennzeichnet, dass** die Signalübertragung in einem Frequenzduplex-System oder Codeduplex-System betrieben wird.

**7.** Verfahren nach einem der vorhergehenden Ansprüche, **dadurch gekennzeichnet, dass** die sendeseitigen Vorverzerrungsmaßnahmen und die empfangsseitigen Entzerrungsmaßnahmen bei der Signalübertragung in einem Funknetz zwischen den Sendern von mobilen, portablen oder festen Sende/Empfangsstationen und einer Basisstation im sogenannten "Uplink"-Betrieb vorgenommen werden.

**8.** Verfahren nach einem der Ansprüche 1 bis 6, **dadurch gekennzeichnet, dass** die sendeseitigen Vorverzerrungsmaßnahmen und die empfangsseitigen Entzerrungsmaßnahmen bei der Signalübertragung in einem Funknetz zwischen einer Basisstation und den Empfängern von mobilen, portablen oder festen Sende/Empfangsstationen im sogenannten "Downlink"-Betrieb vorgenommen werden.

**9.** Verfahren nach Anspruch 7 oder 8, **dadurch gekennzeichnet, dass** die Signalübertragung mit dem Zeitduplex-Mehrträger-CDMA-Verfahren vorgenommen wird, also mit "Time Division Duplex Multi-Carrier Code-Division Multiple-Access", abgekürzt TDD/MC-CDMA.

**Claims**

**1.** A method of wireless transmission of digital signals in a multi-carrier transmission system, such as in a "Multi-Carrier Code-Division Multiple- Access" system, abbreviated as MCCDMA system, using equalization measures that account for the current influence of the transmission channel and consist in a combination of predistortion measures performed on the transmission side and equalization measures performed on the receiving side, the predistortion on the transmission side being effected by suitably distributing the existing transmission energy among the different sub-carriers, **characterized in that**, based on channel information describing the channel influence on the value and the phase of each sub-carrier and sent to the transmission side, the predistortion performed on the transmission side is determined within the scope of the distribution of transmission power by means of the diagonal elements

$$P_{l,l}^{(k)} = \left| H_{l,l}^{(k)} \right|^{p} \left( H_{l,l}^{(k)} \right)^{*} \sqrt{\frac{L}{\sum\limits_{n=1}^{L} \left| H_{n,n}^{(k)} \right|^{2p+2}}}$$

$l = 1, ..., L$, of a diagonal $LxL$-predistortion matrix $P^{(k)}$ which by multiplication with a spread sequence $s^{(k)}$ formed by spreading a data symbol $d^{(k)}$ of the duration $T_d = LT_c$, where $T_c$ = the duration of a chip and $L$ = the length of the spreading sequence, using a spreading sequence $c^{(k)}$ representing the $k$-th spreading sequence of a set of $L$ orthogonal spreading sequences according to the equation

$$\mathbf{s}^{(k)} = d^{(k)} \mathbf{c}^{(k)} = \left( s_1^{(k)}, \ldots, s_L^{(k)} \right)^{T},$$

generates, for a user $k$, $k = 1, .. , K$, a predistorted spread

sequence $\bar{s}^{(k)}$ according to the equation $\overline{\mathbf{s}}^{(k)} = \mathbf{P}^{(k)} \mathbf{s}^{(k)} = \left( \overline{s}_1^{(k)}, \ldots, \overline{s}_L^{(k)} \right)^{T},$ the elements of the predistortion matrix being calculated on the basis of the channel condition information known on the transmission side and summarized as a diagonal $LxL$ channel matrix $H^{(k)}$ whose diagonal elements $H_{l,l}^{(k)}$ describe the channel influence on the value and the phase of each sub-carrier l, $l$=1, ... , L, of the multi-carrier CDMA system, wherein

$(.)^{T}$ indicates the transposition and $(.)^{*}$ indicates the complex conjugation and the root term $\sqrt{\dfrac{L}{\sum\limits_{n=1}^{L} \left| H_{n,n}^{(k)} \right|^{2p+2}}}$

is required for the normalization of the transmission power, and that, besides a correction of the phase influence of the transmission channel, the above mentioned diagonal element equation effects a weighting of the transmission signal with a coefficient that is proportional to $\left|H_{1,1}^{(k)}\right|^{p+1}$, where the choice of the parameter p controls the distribution of transmission power among the sub-carriers by assigning a relatively greater part of the transmission power to those sub-carriers which, according to the channel condition information sent, have experienced relatively little damping during transmission when compared to other sub-carriers, by choosing the parameter to be p > 0, than is assigned to the other sub-carriers.

2. The method of claim 1, **characterized in that** the parameter p is selected as large a possible, yet not so large that the resulting Multiple Access Interference, abbreviated as MAI, cannot be damped sufficiently on the receiving side.

3. The method of claim 1 or 2, **characterized in that** an optimum value of the parameter p is determined by simulation with consideration to the occurring receiving-side MAI suppression ability.

4. The method of claim 1, **characterized by** a combination with optional standard methods of communication, such as different modulation methods, different coding methods, "space-time coding" and "multiple-input multiple-output" methods, abbreviated as MIMO methods.

5. The method of one of the preceding claims, **characterized in that** the signal transmission is performed in a time division duplex system.

6. The method of one of claims 1 to 4, **characterized in that** the signal transmission is performed in a frequency division duplex system or a code division duplex system.

7. The method of one of the preceding claims, **characterized in that** upon signal transmission in a radio network between the transmitters of mobile, portable or stationary transceiver stations and a base station, the transmission-side predistortion measures and the receiving-side equalization measures are performed in a so-called "uplink" operation.

8. The method of one of claims 1 to 6, **characterized in that** upon signal transmission in a radio network between a base station and the receivers of mobile, portable or stationary transceiver stations, the transmission-side predistortion measures and the receiving-side equalization measures are performed in a so-called "downlink" operation.

9. The method of claim 7 or 8, **characterized in that** the signal transmission is performed according to the "Time Division Duplex Multi-Carrier Code-Division Multiple-Access" method, abbreviated as TDD/MC-CDMA.

**Revendications**

1. Procédé de transmission sans fil de signaux numériques dans un système de transmission à ondes porteuses multiples, tel que dans un système d'accès multiple par répartition en code («Multi-Carrier Code-Division Multiple-Access »), abrégé système MC-CDMA, appliquant des mesures anti-distorsion, qui prennent en compte l'influence actuelle du canal de transmission et sont formées d'une combinaison de mesures de prédistorsion réalisées côté émission et de mesures anti-distorsion réalisées côté réception, la prédistorsion côté émission étant assurée en répartissant de manière appropriée l'énergie d'émission existante sur les différentes sous-porteuses, **caractérisé en ce que** sur la base d'une information d'état de canal décrivant l'influence de canal sur le niveau et la phase de chaque sous-porteuse et transmise au côté émission, la prédistorsion réalisée côté émission est déterminée dans le cadre de la répartition de puissance d'émission au moyen des éléments diagonaux

$$P_{1,1}^{(k)} = \left|H_{1,1}^{(k)}\right|^{\rho}(H_{1,1}^{(k)})^{*}\sqrt{\frac{L}{\sqrt{\sum_{n=1}^{L}\left|H_{n,n}^{(k)}\right|^{2p+2}}}}$$

, l = 1, ..., L, d'une matrice de prédistorsion LxL diagonale P(k), qui produit par la multiplication par une séquence étalée s(k), qui est formée par étalement d'un symbole de données

$d^{(k)}$ de durée Td=LT$_c$, Tc = durée de bribe et L = longueur de la séquence d'étalement, au moyen d'une séquence d'étalement $c^{(k)}$ représentant la k$^{eme}$ séquence d'étalement d'un bloc de L séquences d'étalement orthogonales selon l'équation $s^{(k)} = d^{(k)} c^{(k)} = (s_1^{(k)},...,s_L^{(k)})^T$, pour un utilisateur k, k = 1,..., K, une séquence étalée prédistordue devant être émise $\overline{s}^{(k)}$ selon l'équation $\overline{s}^{(k)} = P^{(k)} s^{(k)} = (\overline{s}_1^{(k)},...,\overline{s}_L^{(k)})^T$, les éléments de la matrice de prédistorsion étant calculés sur la base des informations d'état de canal réunies sous la forme d'une matrice de canal LxL H$^{(k)}$ connues côté émission, dont les éléments diagonaux $H_{1,1}^{(k)}$ décrivent l'influence de canal sur le niveau et la phase de chaque sous-porteuse l, l=1, ...L, du système CDMA à ondes porteuses multiples, (.)$^T$ désignant la transposition et (.)* désignant la conjugaison complexe, et le radicande $\sqrt{\dfrac{L}{\sum_{n=l}^{L}\left|H_{n,n}^{(k)}\right|^{2p+2}}}$ désignant le normage de la puissance d'émission, et **caractérisé en ce que** par l'équation des éléments diagonaux indiqués, hormis une correction de l'influence de phase du canal de transmission, une pondération du signal d'émission est réalisée avec un coefficient, qui est proportionnel à $\left|H_{1,1}^{(k)}\right|^{p+1}$, la répartition de la puissance d'émission sur les sous-porteuses étant contrôlée par la sélection du paramètre p, la sélection du paramètre p > 0 permettant d'affecter une part de puissance d'émission, relativement supérieure aux autres sous-porteuses, aux sous-porteuses qui ont subi selon l'information d'état de canal transmise, comparé aux autres sous-porteuses, un affaiblissement relativement faible pendant la transmission.

2. Procédé selon la revendication 1, **caractérisé en ce que** le paramètre p est choisi le plus élevé possible, mais sans être choisi trop élevé au risque que l'interférence d'accès multiple, abrégée MAI, en résultant côté réception ne puisse plus être affaiblie suffisamment.

3. Procédé selon les revendications 1 ou 2, **caractérisé en ce qu'**une valeur optimale pour le paramètre p est déterminée par simulation en tenant compte de la capacité de suppression MAI apparaissant côté réception.

4. Procédé selon la revendication 1, **caractérisé par** une combinaison de procédés standards quelconques de transmission d'informations, tels que différents procédés de modulation, différents procédés de codage, des procédés « Space-Time Coding » (Codage Spatio-Temporel) et « Multiple-Input Multiple-Output », abrégé procédé MIMO.

5. Procédé selon l'une quelconque des revendications précédentes, **caractérisé en ce que** la transmission de signaux a lieu dans un système à duplexage par répartition dans le temps.

6. Procédé selon l'une quelconque des revendications 1 à 4, **caractérisé en ce que** la transmission de signaux a lieu dans un système à duplexage par répartition de fréquence ou système à duplexage par répartition de code.

7. Procédé selon l'une quelconque des revendications précédentes, **caractérisé en ce que** les mesures de prédistorsion côté émission et les mesures anti-distorsion côté réception sont mises en oeuvre lors de la transmission des signaux dans un réseau hertzien entre les émetteurs des stations d'émission/réception mobiles, portables ou fixes et une station de base en mode de liaison ascendante (« Uplink »).

8. Procédé selon l'une quelconque des revendications 1 à 6, **caractérisé en ce que** les mesures de prédistorsion côté émission et les mesures anti-distorsion côté réception sont mises en oeuvre lors de la transmission des signaux dans un réseau hertzien entre une station de base et les récepteurs des stations d'émission/réception mobiles, portables ou fixes en mode de liaison descendante (« Downlink »).

9. Procédé selon les revendications 7 ou 8, **caractérisé en ce que** la transmission de signaux est assurée avec le procédé CDMA à ondes porteuses multiples à duplexage par répartition dans le temps, c'est-à-dire par l'accès multiple par répartition de code à ondes porteuses multiples à duplexage par répartition dans le temps (« Time Division Duplex Multi-Carrier Code-Division Multiple-Access » ou TDD/MC-CDMA).

Fig.1

Fig.2

Fig.3

**EP 1 605 653 B1**

Diese Liste der vom Anmelder aufgeführten Dokumente wurde ausschließlich zur Information des Lesers aufgenommen

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 10343018

### In der Beschreibung aufgeführte Nicht-Patentliteratur

- Multi-Carrier CDMA Mobile Radio Systems - Analysis and Optimization of Detection, Decoding and Channel Estimation. **S. KAISER.** Fortschrittberichte VDI, Düsseldorf. VDI Verlag, 1998, vol. 10
- Systeminhärente Störungen bei ''Spread-Spectrum'' - Vielfachzugriffsverfahren für die Mobilfunkübertragung. **M. SCHNELL.** Fortschrittberichte VDI. VDI Verlag, 1997, vol. 10
- **VON I. COSOVIC ; M. SCHNELL ; A. SPRINGER.** Combined pre- and post-equalization for uplink time division duplex MC-CDMA in fading channels. *Proceedings International Workshop on Multi-Carrier Spread-Spectrum (MC-SS'03,* September 2003, 439-450
- **P. BISAGLIA et al.** Performance Comparison of Single-User Pre-Equalization Techniques for Uplink MC-CDMA Systems. *LOBECOM 2003-IEEE Global Telecommunications Conference (San Francisco, US), 1.-5.12.2003, Conference Proceedings (New York, US,* 05. Dezember 2003, 3402-3406
- **VON I. COSOVIC ; M. SCHNELL ; A. SPRINGER.** On the performance of different channel pre-equalization techniques for uplink time division duplex MC-CDMA. *Proceedings IEEE Vehicular Technology Conference (VTC'03, Fall,* Oktober 2003

18